# EUROPEAN PATENT APPLICATION

(11) **EP 2 944 724 A1**
(43) Date of publication of application: **18.11.2015**
(21) Application number: 14737636.2
(22) Date of filing: 10.01.2014
(51) Int. Cl.: E01F 15/14, F16F 9/04, A63B 71/00

(54) **OBSTACLE PROTECTOR**

(30) Priority: 11.01.2013 ES 201330025
(71) Applicant: Gor-Air Protectores Hinchables, S.L., 28043 Madrid (ES)
(72) Inventor: GORDILLO MARTINEZ, Enrique, E-28043 Madrid (ES)
(74) Representative: Isern-Jara, Nuria
(86) International application number: PCT/ES2014/070013
(87) International publication number: WO 2014/108593

(57) **Abstract**

The invention is formed by at least one tight chamber (6), with an inner layer (3) and an outer layer (4) that can be arranged around an obstacle (2) such as an informative post on a ski slope. The invention also comprises a set of joining elements (12) between the inner layer (3) and the outer layer (4), that keep the distance between the two layers (3, 4) constant.

## Description

The object of the present invention is a device for protecting a variety of obstacles, such as posts or others, specially designed for skiing, but not limited to said activity, so as to prevent the possibility of a person from colliding directly against a rigid obstacle, thus avoiding the risk of injures, which due to the high velocities that may be attained could be extremely serious.

The protector consists of an envelope with a pneumatic chamber, which can be fastened so as to conform a closed envelope, in the shape of a cylinder, prism or similar. The pneumatic chamber comprises a plurality of joining elements between the inner and outer layers; such elements prevent the envelope from bulging and maintain certain degree of protection in the event that the protector was deflated. It comprises at least an inflating/deflating valve.

### State of the art

Document WO2011157864 discloses a double-chamber obstacle protector, with a closed inner chamber and an outer chamber enveloping the former, with means for releasing the air in the event of a collision, and recuperating the pressure by continuously injecting air. The inflation of both the inner chamber and the outer chamber requires the use of girth straps, which prevent the protector from bulging in excess; In addition, in the event that the protector is deflated, there is no protection whatsoever left in the two chambers thereof, since the thickness of the material is irrelevant with regards to the impact.

Document US4596106 discloses an inflatable protective cushion for sky obstacles, formed by an assembly of tubular elements arranged in parallel to the gap the obstacle will occupy; as in the previous case, in the event of an accidental complete deflation the impact could be catastrophic because all the protection disappears: moreover, the protection is irregular because the surface tension in the tubes is different to that existing in the spaces existing between them.

Other non-pneumatic elastic protectors offer a lower degree of protection, their stiffness involves transporting great volumes, which entail a higher transportation cost than in the case of the pneumatic protectors, and generally also a greater weight, in addition to the fact that the protection degree can not be regulated with the pressure of the air chamber.

Therefore, it is desirable to have an obstacle protector that it is simple to mount and provides an effective protection, which takes up little transportation space, and that in the event of accidental loss of the pressure maintains a residual protection that reduces the severity of an eventual accident.

### Description of the invention

The invention being proposed consists of an obstacle protector, particularly an inflatable protector wrapping said obstacles, which comprises:
- an inner layer, an outer layer and additional joining portions or a direct connection between the outer layer and the inner layer, such that said layers and, as the case may be, said portions form an airtight closed chamber, in which the inner layer has a length equal to or greater than the perimeter of the obstacle to be protected, and in which the outer layer has a longer length than the inner layer, and in which the inner layer and the outer layer, or these are hermetically attached to the additional joining portions by thermo-sealing; according to an option, this body may comprise a double chamber, an inner chamber and an outer chamber, or it may also be divided into chambers or groups of chambers juxtaposed one next to the other;.
- at least one air filling and/or emptying valve of the airtight closed chamber, or of each one of the chambers;
- an assembly of joining elements existing between the layer and the outer layer of the chamber, or of at least one of the chambers in the case of multiple chambers; these elements may be permanently full of air or be connected to the outside or the inside of the corresponding chamber; in addition, these joining elements maintain the layers at a suitable distance when the protector is inflated, thereby avoiding the need to use fastening straps; according to an option, the joining elements consist of braces or tighteners, respectively connected to the outer and inner layers, onto supports or parts, for example, circular parts in facing positions in the respective layers, made, for example, of a flexible or semi-flexible plastic, although they could also me made of a textile material, said braces being formed by elastic or non-elastic ropes, and in one single stretch or in several stretches attached together; the supports are thermo-sealed to the outer and inner layers that define the corresponding chamber respectively; the supports may be joined to said layers from the external surface, passing through the corresponding layer, or joined from the inside, always preserving the air-tightness of the chamber: these tighteners make it possible to limit the rebound energy in the event of an impact; in addition, the ropes making up the tightener constitute in turn a physical limit to the deformation caused by an impact;

- flaps arranged at the side ends of the airtight closed chamber, said flaps being provided with rings or with another set of fastening means;
- and incidentally, one or more ropes for tying the flaps together, carabiners or similar joining devices.

### Brief description of the drawings

In order to illustrate the following explanation, attached to the present specification, are three pages with drawings, wherein by way of example, the essence of the present invention has been represented in seven figures, in which:

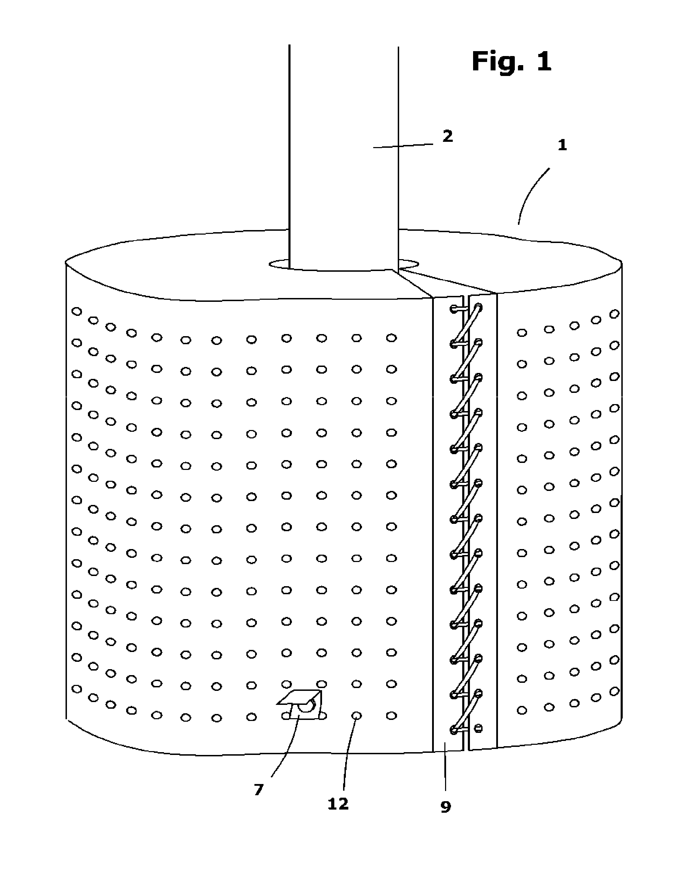

- Figure 1: shows a perspective view of the obstacle protector device of the invention arranged around a signpost;

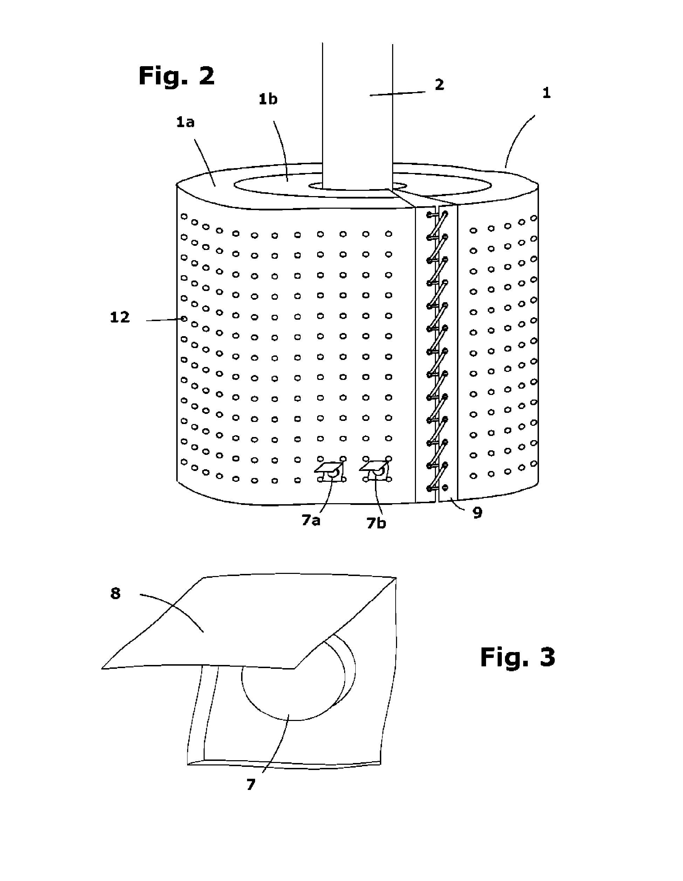

- Figure 2: shows a view similar to that of figure 1, but in which it is possible to observe an inner chamber and an outer chamber in the protector device;
- Figure 3: shows a detail of a valve and the corresponding protection thereof;

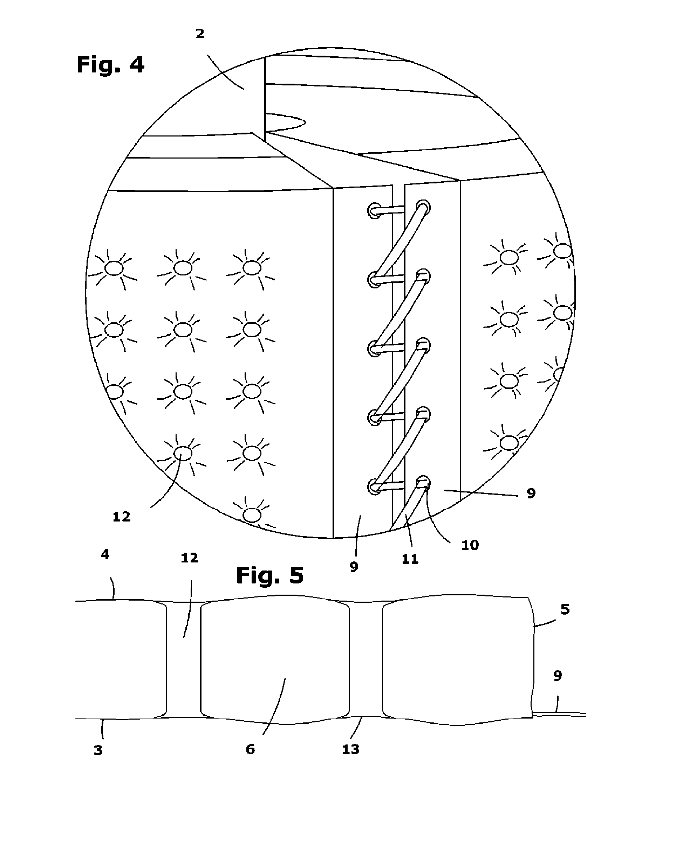

- Figure 4: shows an enlarged view of a portion of the obstacle protector device in use condition;
- Figure 5: shows a sectional view of a portion of the protector device of the invention, wherein joining elements between the outer layer and the inner layer of a chamber, can be observed;

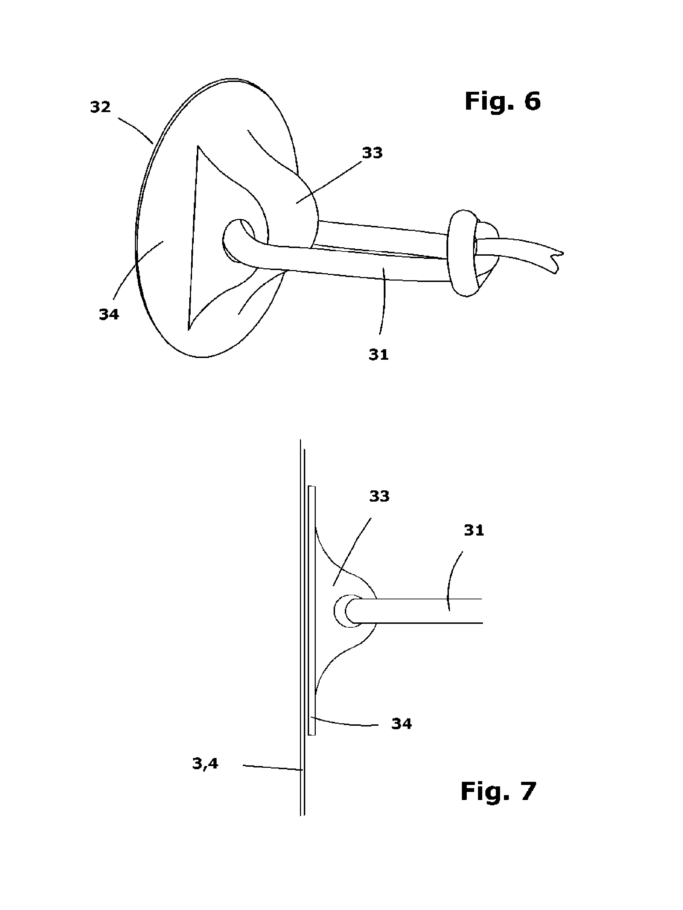

- Figure 6: shows a perspective view of an exemplary embodiment of the invention by means of joining braces between the outer and inner layers; and
- Figure 7: shows a schematic view of the example of figure 6.

### Description of the preferred embodiments of the invention

Next, the embodiment of an obstacle (2) protector (1) is described, wherein said obstacle (2) is a body substantially vertical, such as a post, pillar or similar. The protector is formed by inner (3) and outer (4) layers, sealed to one another along their perimeter or by means of additional portions (5) made of the same material.

The material of which the protector is made is a laminar plastic material, which can be reinforced with a textile fabric or not as a function of the strength required.

Between the inner and outer layers a tight air chamber (6) is formed, which in use conditions shall be under a pressure slightly greater than the atmospheric pressure. It comprises between the inner layer (3) and the outer layer (4) an assembly of joining elements (12) between the chambers, which enable maintaining the distance between both chambers constant, thereby preventing the protector (1) from bulging excessively.

According to an option, the joining elements are tubular and are closed at the inner and outer ends (13) thereof, such that in addition they also are a dampening element in the event of a pressure loss of the chamber (6).

According to another option, the joining elements consist of braces or tighteners formed by ropes (31), connected at one of the ends thereof to the outer layer (4) and at the other of the ends thereof to the inner layer (3). The ropes (31) can be elastic and act against the internal pressure that tends to separate the inner (3) layer from the outer (4) layer, thus producing an additional dampening effect in the returning to the rest position, in the case of deformation caused by an impact. In the event the ropes are not elastic, the role of retaining and maintaining the distance between the inner (3) and outer (4) layers is kept, although the dampening effect due to the elasticity will not take place. In addition, it is possible to combine both types of ropes, elastic and non-elastic.

The ropes (31) are attached to supports (32) or inserts adhered to the inner (3) and outer (4) layers. These supports (32) will typically have a laminar area (34), for example, disk-shaped (it may also be polygonal, elliptic, etc.) integrally connected to the surface of the corresponding layer, as well as, a shackle body (33), preferably all made in one single part and of one single material, such as rubber or plastic. The length of the ropes (31) shall be adjusted by tying thereof to the shackle (33). In addition, according to an option, the rope is formed by two portions attached together, in that case, the adjustment of the length may also be realized through the attachment that joins one another.

The protector of the invention may comprise more than one chamber arranged in concentric layers. In addition, each layer may be formed by more than one chamber juxtaposed, either vertically or laterally.

Typically, each chamber shall comprise at least one air filling/emptying valve (7). This valve (7) will typically be protected with a cover (8).

The side ends of the protector (1) are provided with joining flaps (9) for connecting one another, thereby shaping a wrapping body around the obstacle (2). The flaps (9) comprise a set of joining means for connecting one another, typically but not necessarily said joining means consist of rings (10), through which the rope (11) connecting one flap to another, is passed.

Other joining means, such as pins, elastic rubber bands, etc., are also admissible within the scope of the invention.

According to one embodiment, the protector comprises an inner chamber (1b) and an outer chamber (1 a) wherein at least one of them, typically both of them, comprises the aforementioned joining elements (12). In that case, typically, the device shall comprise independent valves (7a, 7b) for each one of the respective chambers.

As it has also been mentioned, it is further provided that the protector is formed by different juxtaposed modules, in which each module is provided with its corresponding chamber or chambers.

Although it is intended to be applied for protecting sky obstacles, it is also applicable to other types of obstacles in other types of activities, insofar it is compatible with what has been described.

## Claims

1. An obstacle protector, formed by at least one tight chamber (6), with an inner layer (3) and an outer layer (4) and that can be arranged around an obstacle (2) such as an informative post on a ski slope, **characterized in that** it further comprises a set of joining elements (12) between the inner layer (3) and the outer layer (4), which in use conditions maintain the maximum separation distance constant between both layers (3, 4).

2. The obstacle protector, according to claim 1, **characterized in that** the joining elements (12) have a tubular structure, and have their ends (13) closed.

3. The obstacle protector, according to claim 1, **characterized in that** the joining elements (12) consist of braces or tighteners for joining thereof to supports (32) integral to the inner (3) and outer (4) layers, facing one another, said support keeping the air-tightness of the corresponding chamber.

4. The obstacle protector, according to claim 3, **characterized in that** at least some of the joining braces or tighteners consist in non-elastic ropes (31).

5. The obstacle protector, according to claim 3, **characterized in that** at least some of the joining braces or tighteners consist in elastic ropes (31).

6. The obstacle protector, according to any of the claims 3 to 5, **characterized in that** the supports (32), are formed by a laminar area (34) for joining thereof to the corresponding layer (3,4), and a protuberance forming a shackle body (33) for fixing the tighteners.

7. The obstacle protector, according to claim 6, **characterized in that** the supports (32), are arranged from the outer surface of the corresponding layer (3,4), such that the protuberance forming the shackle body (33) passes through said layer for joining thereof to the braces or tighteners.

8. The obstacle protector, according to claim 6, **characterized in that** the supports (32), are arranged from the inner surface of the corresponding layer (3, 4).

9. The obstacle protector, according to any of the claims 1 to 8, **characterized in that** it comprises at least one valve (7) for filling/emptying each air chamber (6).

10. The obstacle protector, according to claim 9, **characterized in that** the valve (7) is covered with a practicable protective flap (8).

11. The obstacle protector, according to any of the previous claims, **characterized in that** it further comprises on the side ends of the air chamber (6), flaps (9) for joining both ends to one another.

12. The obstacle protector, according to claim 11, **characterized in that** it comprises a set of rings (10) for fastening a tying rope (11).

13. The obstacle protector, according to any of the previous claims, **characterized in that** it is formed by an inner chamber and an outer chamber.

14. The obstacle protector, according to any of the previous claims, **characterized in that** it is formed by a series of chambers juxtaposed one next to the other.
